Europäisches Patentamt

European Patent Office

Office européen des brevets

(11) Publication number: **0 486 105 A1**

## EUROPEAN PATENT APPLICATION

(21) Application number: **91202944.4**

(22) Date of filing: **12.11.91**

(51) Int. Cl.5: **C08J 9/35, A01G 31/00**

(30) Priority: **12.11.90 NL 9002467**

(43) Date of publication of application:
**20.05.92 Bulletin 92/21**

(84) Designated Contracting States:
**BE DE FR GB NL**

(71) Applicant: **FBP HOLDING B.V.**
**Industrieweg 161/163**
**NL-5683 CC Best(NL)**

(72) Inventor: **Hendrikx, Gozewinus Petrus**
**Aloysius Hubertus**
**Irenelaan 27**
**Weert(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Method for preparing a substrate material and the substrate material obtained.

(57) The invention provides a method for preparating a substrate material, wherein that polyurethane ether foam flakes having a bulk density of 15 to 40 kg/m³, and having a cell structure containing both open and half-open cells, are mixed, in a mixing installation, with a prepolymer based on polyurethane, in a weight ratio of 1 part by weight of prepolymer per 7 to 15 parts by weight of polyurethane ether foam particles, and, if desired, auxiliaries and the mixture is then polymerised, with or without the addition of activators and with or without heating, the homogeneous mixture obtained is spread and compressed in a mould, heated with steam at 100 to 140°C, for 5 to 20 minutes, and the shaped mixture is foamed together to form blocks having a bulk density of 65 to 110 kg per m³. The invention further comprise a substrate material obtained according to this process. With the trade material obtained according to the invention can be cut to the desired dimensions. The cutting can be carried out in a manner known per se. The invention can use recycled raw materials. The substrate materials can be used for cultivation over a prolonged period, with good yields, without loss in harvest over many years of use. Because of the rigidity of the material, the vulnerability is reduced, as a result of which the material can readily be stacked and, if desired, can be walked on. The material does not release any dust and consequently prevents allergic reactions.

EP 0 486 105 A1

The invention relates to a method for preparing a substrate material, in particular for plant cultivation, and to the substrate material obtained.

Substrate materials for plant cultivation without soil or for plant cultivation on artificial surfaces for the cultivation of vegetables, flowers, small fruit and ornamental plants, are generally known and in general consist of mineral wool products. The disadvantage of these known materials is that, after use, they have to be dumped as waste. Re-use after prolonged use is problematical with these materials.

A method for preparing a substrate material has now been found, which method is characterised in that polyurethane ether foam flakes which have a bulk density of 15 to 40 kg/m$^3$, and preferably 22 to 25 kg/m$^3$, and have a cell structure containing both open and half-open cells, are mixed, in a mixing installation, with a prepolymer based on polyurethane, in a weight ratio of 1 part by weight of prepolymer per 7 to 15 parts by weight of polyurethane ether foam particles, and, if desired, auxiliaries and the mixture is then polymerised, with or without the addition of activators and with or without heating, the homogeneous mixture obtained is spread and compressed in a moulding press to a bulk density of 60 to 140 kg/m$^3$, and preferably 22 to 25 kg/m$^3$, heated with steam at 100 to 140°C, for 5 to 20 minutes, and the shaped mixture is foamed together to form blocks having a bulk density of 65 to 110 kg per m$^3$. Preferably, the mixture is foamed together to form blocks having a bulk density of 75 to 85 kg/m$^3$ and in particular 80 kg/m$^3$. At this bulk density, an outstanding water-absorption and water-retaining capacity is obtained.
Heating is expediently carried out by passing steam along the underside.

Preferably, foam flakes having a particle size of 1 to 40 mm are used. The substances which regulate the substance absorption, plant-feeding elements, pH-buffering substances and/or nutrient-absorbing auxiliaries can be added in order to regulate the behaviour of the substrate. Of course, the constituents used must not be phytotoxic.

Particularly suitable moisture-absorbing agents are peat, polyacrylamide compounds and/or cellulose.

Fertilisers which can be added are slow-acting organic fertilisers, slow-acting inorganic fertilisers and/or silicon-based soil-improving agents.

The addition of blood meal, horn meal and/or bone meal can also be advantageous.

The substrate material obtained according to the invention can be cut to the desired dimensions. This cutting can be carried out in a manner known per se.

The method according to the invention can be carried out using recycled raw materials. It is found that the substrate materials can be used for cultivation over a prolonged period, with good yields, without loss in harvest over many years of use. Because of the rigidity of the material, the vulnerability is reduced, as a result of which the material can readily be stacked and, if desired, can be walked on. The material does not release any dust and consequently prevents allergic reactions. The substrate material can be rapidly and economically cleaned and the temperature, moisture content and the balance between the nutrient elements (EC-pH) are better controllable. As a result of the high coherence and the vapour pressure curve (pF curve), the required volume for plant cultivation is reduced.

The substrate according to the invention is particularly environmentally friendly because it can be recycled. The material according to the invention also offers the possibility of gas exchange ($O_2$-$CO_2$), has a very good water-retaining capacity, absorbs water sufficiently rapidly and has a good elasticity, as a result of which a constant density is obtained even in the case of inexpert use of the material, and, finally, the material is free from phytotoxic substances and is not attacked by water, salts and acids in the usual concentrations.

Materials with open and half-open cells are used for the material. The gas exchange is dependent on the size of the cells, which, in turn, is related to the density, and, of course, the size of the cells has an influence on the rate at which water is absorbed. Material with half-open cells is understood to be cells which, in addition to the supporting structure, are partially (and thus not completely) closed by a membrane.

In connection with the required rapid water absorption, that is to say it must be possible for saturation to be achieved within a few minutes, in order to be able to supply the plants with the feed sufficiently rapidly, a material with open and half-open cells is desired which has a cell size of, on average, 16 to 28 cells per cm, which corresponds to a foam having a bulk density of 18 to 35 kg per m$^3$.

The foam used is a flexible foam; this is understood to be a foam which exhibits an appreciable degree of elasticity. In general, flexible foams are understood to be foams which have a density of up to 60 kg/m$^3$ and have an appreciable elasticity.

In connection with plant cultivation it is, of course, necessary to use starting materials which have not been treated with fire-retardant substances, anti-bacterial and anti-mould agents, colorant based on heavy metals and other reactive substances. Of course, the materials must also be able to withstand attack by water, salts and acids in the usual conventional aqueous nutrient solutions having a pH of 3 to 9 and EC (electrical conductivity) of 0-20 in S/cm$^2$. The materials are obtained using polyurethane ether flakes having a particle size of 1 to 40 mm. Flakes which are too large lead to an impairment of the homogeneity of the substrate obtained. The polyurethane ether flakes can be ground in order to obtain the desired size. The size of these flakes is also related to the ultimate water-retaining power and the coherence of the substrate.

In order to retain the plant-friendly characteristics of the flakes in full, the substrate material must be bound by means of a similar binding foam. Binding by means of heating or binding by using a pressure-sensitive adhesive is found to impair the gas exchange and the water-retaining power and, moreover, to be phytotoxic.

It has been found that a suitable binding can be obtained by using one part by weight of prepolymer per 7 to 15 parts by weight of polyurethane ether foam particles and auxiliaries. A polyurethane prepolymer based on polyisocyanates and polyols is used for binding.

Suitable polyisocyanates are diphenylmethane 4,4'-diisocyanate, toluene 2,4-diisocyanate, toluene 2,6-diisocyanate, naphthalene 1,4-diisocyanate, triphenylmethane 4,4-, 4''-triisocyanate, hexamethylene 1,6-diisocyanate and condensation products of these polyisocyanates. The most suitable polyisocyanate mixture is toluene 2,4-diisocyanate and toluene 2,6-diisocyanate in a ratio of 80:20. This mixture is, inter alia, available commercially as Desmodur T 80.

Suitable polyols are condensation products of propylene oxide and ethylene glycol, propylene glycol, trimethylolpropane or hydroxyl group-containing esters of these compounds with, for example, adipic acid or phthalic acid. A polyol based on propylene oxide having a molecular weight of 3000 to 5000 is particularly suitable. A polyol of this type can be obtained commercially as Desmophen 3800 or 7160 with a molecular weight of 3500 plus or minus 300.

The desired bulk density is determined by the water-retaining power, the root penetration, the coherence of the material and the gas exchange. With a bulk density below 60 kg per $m^2$ the water-retaining power is inadequate and the coherence of the material is inadequate, although an outstanding penetration is achieved.

With a density higher than 140 kg per $m^3$, the water uptake is too slow, the root penetration is difficult and the gas exchange is insufficient.

The pF curve is of importance in connection with the use value. This curve is the vapour pressure and is the negative log from SM, where SM is the suction stress expressed in cm water column above the water table. In the case of plant cultivation without soil, this is to be found at the drainage holes in the film, or in the gutters it is the top of the layer of water. Below the water table, the suction stress assumes the form of a hydrostatic pressure and pH is then less than 0.

| Height (cm) above the water table | pF value |
|---|---|
| 1.0 | 0.00 |
| 3.0 | 0.48 |
| 11.0 | 1.04 |
| 18.0 | 1.23 |
| 70.0 | 1.85 |
| 100.0 | 2.00 |
| 1000.0 | 10.00 (absolute maximum, never achievable) |

The particular features of the substrate according to the invention are that the material is particularly suitable for the cultivation of plants without soil and has a high elasticity and strength, hyper long-term use is possible and the good adjustability offers considerable advantages over known substrates. Moreover, the material is simple to recycle. If the material has to be prepared for re-use following cultivation, the material can be rolled dry and rinsed. By this means the salts which have accumulated during the cultivation process and residual root secretions are removed. It is possible to steam-treat the material to a temperature of 180°C, at which any bacteria, fungi, and viruses present are killed. As a result of this rapid and complete cleaning method, it is possible to administer the requisite nutrients up to the end of the cultivation, as a result of which the controllability of the cultivation is maintained.

If, despite the possible re-use, the material should be discarded for any reason, the mats can be reground and in the ground form can serve as raw material for diverse applications.

The blocks are cut and/or sawn from the substrate material according to the invention to dimensions specific for the variety of plant and artificial nutrient system. Mats 0.5 to 1.5 cm thick are made from material having a bulk density of 80 (+ or -20%) kg/m$^3$, which usually contains no auxiliaries, in order to allow diverse small salad vegetables, such as cress, watercress, lambs lettuce, chervil and other herbs, to germinate and grow.

Substrate elements 0.5 to 10 cm thick are produced from the same material for hydroculture of vegetables such as tomatoes, peppers, cucumbers, melons, aubergines, courgettes and beans, and flowers, such as roses, carnations, chrysanthemums, gerberas, diverse orchids and other plants. The same applications as above are achieved with a bulk density of 100 (+ or -20%) kg/m$^3$, but this is less generally used.

The material can also be processed in a manner known per se on culture blocks and support elements for diverse plants in diverse nutrient systems.

Test with watercress:

A sample of a possible polyether foam approximately 2 cm thick is placed in a vessel. This sample is saturated with pure water having a pH of about 6. Watercress seed is then scattered on the sample. For a good test, a minimum of 30% of the sample surface must be sprinkled with at least 2 seeds/cm$^2$. The vessel is covered, but in such a way that a limited amount of light has access to the seeds on the polyether foam sample. These vessels are placed in a climate-controlled room. At a temperature of 12 to 18°C, the germination and development of the watercress can be checked after 10 to 12 days. Good germination and good root development, which penetrates the foam, are absolute preconditions for suitability. The sample is evaluated as good if a white-coloured root formation of 1 to 3 cm is visible in a foam. The leaf/stems must have grown to 1 cm.

The material does not meet the requirements if root formation is inadequate, if there is no or little leaf growth, if the root is not white and if the leaf or the stem is thickened. Causes of inadequate results can be the presence of plant-unfriendly, water-soluble substances, too high a bulk density or an incorrect temperature. Good results were recorded with the samples according to the invention.

Test with tomato and/or cauliflower:

A sample of the polyether foam to be tested, having a thickness of 2 cm, is placed in a vessel with a perforated base. This vessel is filled with a natural or synthetic substrate suitable for plant cultivation. A three to four week old tomato and/or cauliflower is planted in the substrate. This vessel is placed in another larger vessel. Pure water is added to the larger vessel outside the first vessel, in such a way that the plants always have to suck in the water through the brittle polyether foam. If the plants have to stand on this foam for a prolonged period, a minimum amount of feed is also added. However, this is not essential for the success of the tests.

The vessels, containing their plants, stand in a climate-controlled room with adequate light. At a temperature of a minimum of 18°C, the growth development of the plants can be checked after 18 days. It is essential that the leaves display no symptoms of burning and that the roots have penetrated the sample of polyether foam.

If the bulk density of the polyether foam is too high, both the watercress roots and the tomato and/or cauliflower roots no longer penetrate the foam and remain lying on top of this or grow around it.

The material is assessed as good if flawless root penetration into the substrate is found after 21 days at 18 to 21°C and flawless leaves have developed. If the material is unsuitable, healthy roots are not formed and leaves show withering phenomena at the leaf edge.

The tests described above can also be used to check whether recycled material is suitable for processing according to the invention. The tests described above yield the result in a relatively simple manner, without more extensive laboratory analyses being necessary.

4

**Claims**

1.  Method for the preparation of a substrate material, characterised in that polyurethane ether foam flakes which have a bulk density of 15 to 40 kg/m$^3$, and have a cell structure containing both open and half-open cells, are mixed, in a mixing installation, with a prepolymer based on polyurethane, in a weight ratio of 1 part by weight of prepolymer per 7 to 15 parts by weight of polyurethane ether foam particles, and, if desired, auxiliaries and the mixture is then polymerised, with or without the addition of activators and with or without heating, the homogeneous mixture obtained is spread and compressed in a mould, heated with steam at 100 to 140°C, for 5 to 20 minutes, and the shaped mixture is foamed together to form blocks having a bulk density of 65 to 110 kg per m$^3$.

2.  Method according to Claim 1, characterised in that foam flakes with a particle size of 1 to 40 mm are used.

3.  Method according to Claim 1 or 2, characterised in that polyurethane ether foam flakes having a bulk density of 22 to 25 kg/m$^3$ are used.

4.  Method according to Claims 1-3, characterised in that the shaped mixture is foamed together to form blocks having a bulk density of 75 to 85 kg/m$^3$.

5.  Method according to Claims 1 or 4, characterised in that substances which control the moisture absorption, plant-feeding elements, pH-buffering substances and/or nutrient-absorbent auxiliaries are added.

6.  Method according to Claim 5, characterised in that peat, polyacrylamide compounds and/or cellulose are added.

7.  Method according to Claim 5, characterised in that slow-acting organic fertilisers, slow-acting inorganic fertilisers and/or silicon-based soil-improving agents are added.

8.  Method according to Claim 5, characterised in that blood meal, horn meal and/or bone meal are added.

9.  Substrate material obtained according to Claims 1-8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | VAKBLAD VOOR DE BLOEMISTERIJ. vol. 42, no. 5, 30 January 1987, DOETINCHEM NL page 105; ANONYMOUS: 'SCHUIMSTOF ALS GRONDSTOF' | 1-4,9 | C08J9/35 A01G31/00 |
| Y | *COMPLETE ARTICLE* | 1-9 | |
| Y | GB-A-1 165 123 (DOW CHEMICAL CO.) * claims 1,3,4,8-11 * * page 8, line 16 - page 8, line 45 * * page 8, line 56 - page 8, line 72 * * page 12, line 7 - page 12, line 37 * * page 13, line 5 - page 13, line 13 * | 1-9 | |
| X | GB-A-920 272 (AEROPREEN LTD) * claims 1,8,13,14,18 * * page 2, line 46 - page 2, line 64 * * example 3 * | 1-4 | |
| X | US-A-4 385 131 (R.N.FRACALOSSI ET AL.) * claims 1,6,7,12 * * example 1 * | 1-5,7 | |
| A | US-A-3 798 836 (L.CL RUBENS ET AL.) * claims 1-5 * | 1,5,6 | TECHNICAL FIELDS SEARCHED (Int. Cl.5) C08J A01G |
| A | FR-A-2 248 780 (ASSOCIATION FORET-CELLULOSE AFOCEL) * claims 1-10 * | 1,5,6 | |
| A | FR-A-2 442 810 (LABORATOIRE ALGOCHIMIE) * claims 1,8 * | 1,5,7,8 | |

The present search report has been drawn up for all claims

| Place of search | Date of completion of the search | Examiner |
|---|---|---|
| THE HAGUE | 02 MARCH 1992 | HALLEMEESCH A.D |